# EUROPEAN PATENT SPECIFICATION

(11) **EP 3 167 681 B1**
(45) Date of publication and mention of the grant of the patent: **22.05.2019**
(21) Application number: 15832355.0
(22) Date of filing: 12.08.2015
(51) Int. Cl.: H04W 74/08, H04W 84/02

(54) **METHOD TO IMPROVE CHANNEL ACCESS OPPORTUNITY IN A WIRELESS COMMUNICATIONS SYSTEM**
VERFAHREN ZUR VERBESSERUNG DER KANALZUGRIFFSMÖGLICHKEIT IN EINEM DRAHTLOSKOMMUNIKATIONSSYSTEM
PROCÉDÉ POUR AMÉLIORER UNE OPPORTUNITÉ D'ACCÈS À UN CANAL DANS UN SYSTÈME DE COMMUNICATION SANS FIL

(30) Priority: 12.08.2014 US 201462036162 P
(43) Date of publication of application: 17.05.2017
(73) Proprietor: MediaTek Inc., Hsin-Chu (TW)
(72) Inventor: JAUH, Yuh-Ren, Taoyuan City, Taiwan (TW); WANG, James June-Ming, San Marino, 91108 California (US); WANG, Chao-Chun, Taipei City (TW); YU, Ching-Hwa, Tainan City (TW); LIU, Jianhan, San Jose, 95131 California (US)
(74) Representative: Hoefer & Partner Patentanwälte mbB
(86) International application number: PCT/CN2015/086750
(87) International publication number: WO 2016/023492

(56) References cited:
- WO-A1-2014/110397
- CN-A- 1 462 523
- US-A1- 2006 092 889
- US-A1- 2006 092 889
- US-A1- 2007 133 489
- US-A1- 2008 102 845
- US-A1- 2008 267 079

## Description

### TECHNICAL FIELD

The disclosed embodiments relate generally to wireless communication, and, more particularly, to CCA improvement for supporting operator BSS.

### BACKGROUND

Wifi networks have seen exponential growth across organizations in many industries. High-density wireless networks are increasingly in demand. Many new technologies have been adopted, such as multiple input multiple output (MIMO) technology. In a traditional Wifi network deployment, the deployment of Access point (AP) of a basic service set (BSS) is carefully planned to minimize BSS overlapping. With the increasing deployment of Wifi network, overlapping BSS Wifi network has become unavoidable. For example, Wifi networks managed by multiple operators operate at the same location, such as an outdoor public Wifi network overlapping with each other and highly likely to overlap with some indoor privately managed Wifi networks. In such scenarios, the multiple managed Wifi networks, each run by independent operators, would likely overlapping each other in the coverage areas. The current Wifi standard uses carrier sense multiple access with collision avoidance (CSMA/CA) to allow multiple mobile stations to access the network without collision. When there are data frames to be sent, a mobile station starts the backoff procedure and performs clear channel assessment (CCA) procedure before it can access the network. If the medium is determined to be busy at any time during the backoff stage, the backoff procedure is suspended. The wireless communications device only resumes the backoff procedure when the channel is sensed to be idle for a distributed interframe space (DIFS) period or extended interframe space (EIFS). The channel is assessed to be idle if the measured received signal level for the channel is smaller than a CCA threshold. In the current Wifi standard, the same CCA threshold applies to all sensed traffic of the channel. In a high-density overlapping basic service set (OBSS) deployment, it would prolong the access procedure because the transmissions from different networks are all likely to contribute to the measured signal level of the radio channel.

WO 2014/110397 A1 discloses a method and apparatus for communication in a network of WLAN overlapping basic service set (OBSS). A station or an access point may indicate its interference reporting and inter-BSS coordination capabilities in a message. At least one of quality of service (QoS) settings, transmission opportunity (TXOP), restricted access window (RAW) or beacon subinterval schedules, or traffic indication map (TIM) or uplink access window assignment may be coordinated. The station may receive a request for interference measurements on the basic service set (BSS) of the station or neighboring BSSs that the station can overhear. The station may transmit an interference measurement report to an access point. The coordination may be performed based on the interference measurement report. Furthermore, STAs may transmit channel or sector preferences to APs and receive channel or sector assignments.

To improve efficiency and the access procedure, improvement and enhancement are required for CCA.

### SUMMARY

Methods and apparatus are provided for clear channel assessment in a Wifi network. In one novel aspect, different clear channel assessment (CCA) threshold value is set for intra-BSS and inter-BSS frames. The wireless communications device, preparing for data transmission, starts a backoff procedure with a counting down process. A wireless communications device starts the CCA procedure sensing the radio channel and determines if the radio channel is busy or idle during the backoff period. The wireless communications device decodes the detected frames and determines whether the frame is an intra-BSS frame or an inter-BSS frame. The CCA threshold value is adjusted based on the determined frame type. In one embodiment, if the detected frame is an inter-BSS frame, the CCA threshold value is raised. The CCA procedure compares the signal level of the detected frames with the inter-BSS CCA threshold. If the signal level of the detected frames is lower than the inter-BSS CCA threshold, the radio channel is considered idle. The counting down process is resumed if the radio channel is idle for a DIFS / EIFS period. In one embodiment, the inter-BSS is determined based on the BSS color in SIG-A field. In another embodiment, the inter-BSS is determined by the MAC address.

Further details and embodiments and methods are described in the detailed description below. This summary does not purport to define the invention. The invention is defined by the claims.

### BRIEF DESCRIPTION OF DRAWINGS

The accompanying drawings, where like numerals indicate like components, illustrate embodiments of the invention.
Figure 1 illustrates exemplary wireless networks using intra-BSS and inter-BSS CCA thresholds in accordance with embodiments of the current invention.
Figure 2 illustrates an exemplary diagram of a wireless communications device setting different CCA threshold based on the type of the detected frame in accordance to embodiments of the current invention.
Figure 3 illustrates an exemplary diagram of the access process for the wireless communications device when the detected frames are intra-BSS frames in accordance with embodiments of the current invention.
Figure 4 illustrates an exemplary diagram of the access process for the wireless communications device when the detected frames are inter-BSS frames in accordance with embodiments of the current invention.
Figure 5 illustrates detailed steps for the wireless communications device to determine whether detected frames are intra-BSS or inter-BSS frames in accordance with embodiments of the current invention.
Figure 6 illustrates an exemplary flow chart for a wireless communications device to set different CCA threshold value based on the type of detected frames for the counting down procedure in accordance with embodiments of the current invention.

### DETAILED DESCRIPTION

Reference will now be made in detail to some embodiments of the invention, examples of which are illustrated in the accompanying drawings.

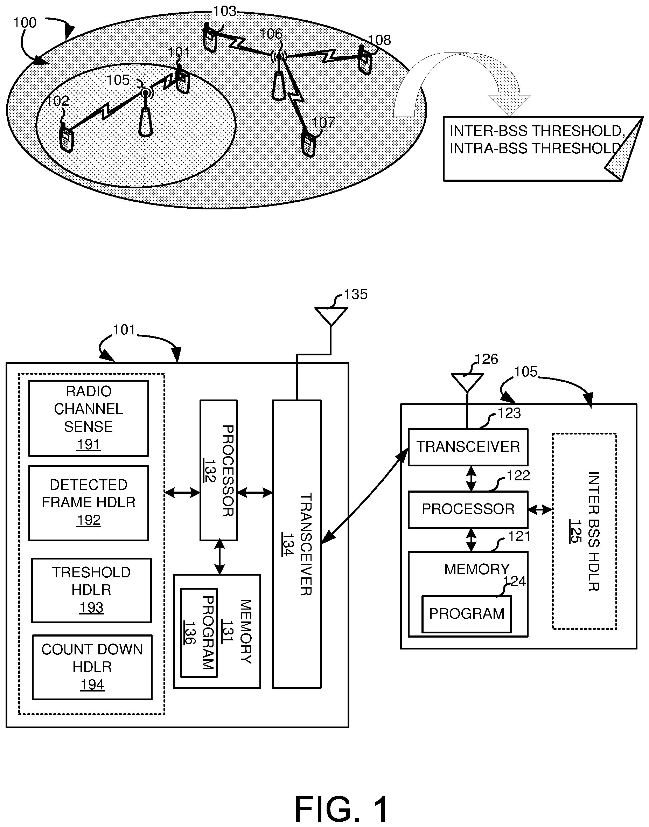

Figure 1 illustrates an exemplary wireless network 100 using intra-BSS and inter-BSS CCA thresholds in accordance with embodiments of the current invention. Wireless communications system 100 includes one or more wireless networks, and each of the wireless communication network has fixed base infrastructure units, such as wireless communications devices 105 and 106. The base unit may also be referred to as an access point, an access terminal, a base station, or by other terminology used in the art. Each of the wireless communications stations 105 and 106 serves a geographic area. The geographic area served by wireless communications stations 105 and 106 overlaps.

Wireless communications devices 101 and 102 in the wireless network 100 are served by base station 105. Other wireless communications device, such as wireless communication device 103, 107 and 108, are served by a different base station 106.

In one novel aspect, the wireless communications device sets different CCA threshold for intra-BSS frames and inter-BSS frames. For example, wireless communications device 101 in the overlapping BSS system receives signals from both intra-BSS stations/devices, such as wireless communications device 103, and inter-BSS stations, such as wireless communications station 106. The wireless communications device first uses the initial CCA threshold to detect the traffic. Once a frame is detected and decoded frame, the wireless communications device determines whether the frame is an intra-BSS frame or an inter-BSS frame based on predefined rules. Different CCA threshold is set based on the determination of intra/inter-BSS frame. The inter-BSS CCA threshold is higher than the intra-BSS threshold.

Figure 1 further shows simplified block diagrams of wireless stations 101 and base station 102 in accordance with the current invention.

Base station 102 has an antenna 126, which transmits and receives radio signals. A RF transceiver module 123, coupled with the antenna, receives RF signals from antenna 126, converts them to baseband signals and sends them to processor 122. RF transceiver 123 also converts received baseband signals from processor 122, converts them to RF signals, and sends out to antenna 126. Processor 122 processes the received baseband signals and invokes different functional modules to perform features in base station 102. Memory 121 stores program instructions and data 124 to control the operations of base station 102. Base station 102 also includes a set of control modules, such as inter-BSS handler 125 that carry out functional tasks to configure, execute and communicate with the wireless communications device 101 inter-BSS CCA threshold related tasks.

Wireless communications device 101 has an antenna 135, which transmits and receives radio signals. A RF transceiver module 134, coupled with the antenna, receives RF signals from antenna 135, converts them to baseband signals and sends them to processor 132. RF transceiver 134 also converts received baseband signals from processor 132, converts them to RF signals, and sends out to antenna 135. Processor 132 processes the received baseband signals and invokes different functional modules to perform features in mobile station 101. Memory 131 stores program instructions and data 136 to control the operations of mobile station 101.

Wireless communications device 101 also includes a set of control modules that carry out functional tasks. A radio-channel-sense handler 191 senses a radio channel in accordance with a first predetermined rule with a first threshold. In one embodiment, the first predetermined rule is a backoff procedure as defined in the 802.11 standard. A detected frame handler 192 decodes the detected frame and determines whether it is an intra-BSS or an inter-BSS. In one embodiment, detected frame handler 192 further determines whether the inter-BSS frame is an OBSS frame. A threshold handler 193 sets different CCA threshold based on the determined frame type. In one embodiment, threshold 194 handler sets the CCA threshold to be an intra-BSS threshold or an inter-BSS threshold based on the determined frame type. In one embodiment, threshold 193 handler further determines if the CCA threshold is the OBSS threshold or the inter-BSS threshold based on the frame type. A count down handler 194 performs the modified counting down procedure based on the CCA threshold set by threshold handler 193.

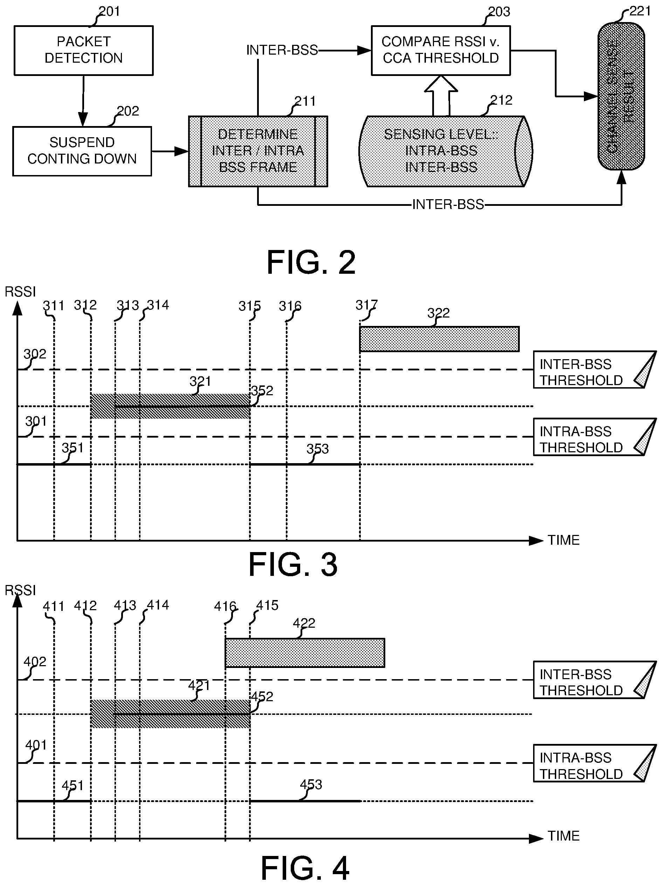

Figure 2 illustrates an exemplary diagram of a wireless communications device setting different CCA threshold based on the type of the detected frame in accordance with embodiments of the current invention. A wireless communications device preparing to send a first frame starts the backoff procedure. At step 201, the wireless communications device detects a second frame with a signal level higher than a first CCA threshold on the radio channel during the backoff process. In one embodiment, the first CCA threshold is set to -82 dbm. At step 202, the wireless communications device suspends the counting down counter of the backoff procedure. At step 211, the wireless communications device decodes the detected second frame and determines whether it is an inter-BSS or intra-BSS frame. In one embodiment, the wireless communications device determines the inter/intra-BSS type by decoding an embedded identifier, for example a BSS color in a signal field (SIG-A) in the PHY header. The BSS color indicates whether the detected second frame is an inter-BSS or intra-BSS frame. In another embodiment, the wireless communications device decodes the MAC header of the detected second frame to get the embedded BSSID or the MAC address. The wireless communications device determines whether the detected second frame is an inter/intra-BSS frame based on the BSSID or the MAC address. If step 211, the wireless communications device determines the detected second frame is an intra-BSS frame, the wireless communications device moves to step 221 and determines the CCA results as being busy. If step 211 determines the detected second frame is an inter-BSS frame, the wireless communications device moves to step 212. At step 212, based on the determined frame type, the wireless communications device sets the second CCA threshold value to be the inter-BSS level. In one embodiment, the second CCA threshold is -62 dbm. At step 203, the wireless communications device compares the detected second frame's signal level with the second CCA threshold value set at step 212. The wireless communications device at step 221 determines the channel sense results. If the detected signal level is greater or equal to the second CCA threshold value, the radio channel is determined to be not idle. If the detected signal level is smaller than the CCA threshold value, the radio channel is determined to be idle. If the channel is determined to be idle, the communications device resume the counting down process and transmits the first frame when the counting down process ends.

Figure 3 illustrates an exemplary diagram of the access process for the wireless communications device when the detected frames are intra-BSS frames in accordance with embodiments of the current invention. Two different CCA threshold levels are set for the wireless communications device in a BSS system. CCA threshold level 301 is an intra-BSS CCA threshold level. CCA threshold level 302 is an inter-BSS CCA threshold level. The inter-BSS CCA threshold level is higher the intra-BSS CCA threshold level. At step 311, in preparing for sending a data frame 322 on the radio channel, a wireless communications device starts the backoff procedure by starting the counting down procedure. The wireless communications device senses the radio channel during the backoff period. The signal level 351 is lower than the CCA threshold level 301. The wireless communications device continues with the counting down process. At step 312, data frame 321 was transmitted on the radio channel. At step 313, the wireless communications device gets the signal level measurement results of the detected data frame 321. The measured signal level becomes signal level 352. Signal level 352 is higher than CCA intra-BSS threshold level 301. At step 313, the wireless communications device suspends the count procedure and starts to decode the detected data frame.

In one novel aspect, the wireless communications device determines whether the detected data frame is an intra-BSs frame or inter-BSS frame. In one embodiment, the wireless communications device decodes SIG-A in the PHY header and gets an identifier of a BSS, BSS color. In another embodiment, the wireless communications device decodes the MAC header. In one example, as shown in Figure 3, the wireless communications device determines at step 314, that the detected frame is an intra-BSS frame. The counting down procedure continues to be suspended. At step 315, the transmission of the data frame 321 ends. Subsequently, the measured signal level drops back to signal level 353, which is lower than the intra-BSS CCA level 301. The wireless communications device continues sensing the radio channel for DIFS or EIFS period. At step 316, the DIFS or EIFS period expires with the signal level lower than the CCA level 301. The wireless communications device determines that the radio channel has been idle for the DIFS / EIFS period. At step 316, the wireless communications device resumes the counting down procedure. At step 317, the counting down procedure completes while the signal level stays below CCA threshold level 301. At step 317, the wireless communications device sends its data frame 322.

Figure 4 illustrates an exemplary diagram of the access process for the wireless communications device when the detected frames are inter-BSS frames in accordance with embodiments of the current invention. Two different CCA threshold levels are set for wireless communications device in an overlapping BSS system. CCA threshold level 401 is an intra-BSS CCA threshold level. CCA threshold level 402 is the inter-BSS CCA threshold level. At step 411, in preparing for sending a frame on the radio channel, the wireless communications device starts the backoff procedure and starts the counting down procedure. The wireless communications device senses the radio channel during the back off period. The signal level 451 is lower the CCA threshold level 401. The wireless communications device continues with the counting down. At step 412, a data frame 421 is transmitted on the radio channel. At step 413, the wireless communications device gets the signal level measurement results for the frame 421. The measured signal level becomes signal level 452. Signal level 452 is higher than CCA intra-BSS threshold level 401. At step 413, the wireless communications device suspends the count procedure and starts to decode the frame 421.

In one novel aspect, the wireless communications device determines whether the detected frame is an intra-BSS frame, or an inter-BSS frame. In one example, at step 413, the wireless communications device determines that the detected frame is an inter-BSS frame. The wireless communications device updates the CCA threshold level to inter-BSS CCA level 402. If the signal level of the frame 421 is lower than the newly updated CCA threshold level, the radio channel is determined to be idle. The wireless communications device resumes the backoff procedure in accordance with a second predefined rule. In one embodiment, the second predefined rule is to resume the counting down process if the medium is determined to be idle for DIFS / EIFS period. At step 413, the wireless communications device continues sensing the radio channel for DIFS or EIFS period. At step 414, the DIFS or EIFS period expires with the signal level lower than the CCA level 402. At step 414, the wireless communications device resumes the counting down procedure. At step 416, the counting down procedure completes. At step 416, the wireless communications device sends its data frame 422. At step 415, the transmission of inter-BSS frame 421 ends. In accordance with the embodiments of the current invention, the transmission of frame 422 overlap with inter-BSS frame 421.

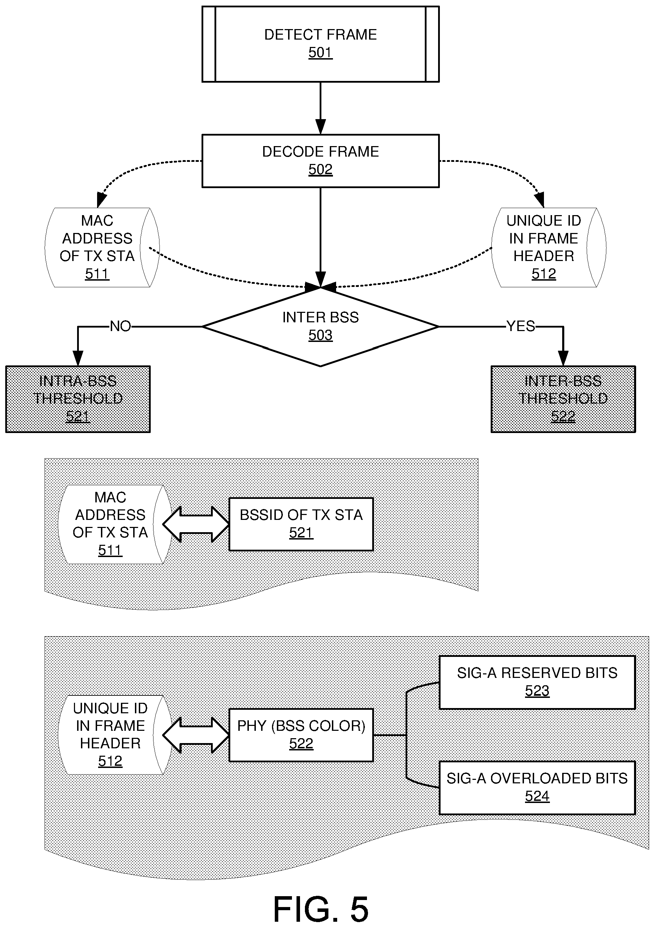

Figure 5 illustrates detailed steps for the wireless communications device to determine whether detected frames are intra-BSS or inter-BSS frames in accordance with embodiments of the current invention. At step 501, the wireless communications device detects frames on the radio channel. At step 502, the wireless communications device decodes the detected second frames. In one embodiment, the wireless communications device decodes the MAC header to get the BSSID or the MAC address at step 511. In another embodiment, at step 512, the wireless communications device decodes a unique identifier in the frame header of the detected second frame. The BSS color indicates the received frames are from inter BSS or intra BSS. At step 503, the wireless communications device determines whether the frame is an intra-BSS or inter-BSS frame based on the result from step 511 or 512. If step 503 determines the detected frames are intra-BSS frames, the wireless communications device moves to step 521 and sets the CCA threshold value to an intra-BSS threshold. If step 503 determines the detected frames are inter-BSS frames, the wireless communications device moves to step 522 and sets the CCA threshold value to an inter-BSS threshold. The inter-BSS threshold is higher than the intra-BSS threshold.

Figure 5 further illustrates detailed frame structures to determine whether the detected second frame is an intra-BSS frame or an inter-BSS frame. In one embodiment, by decoding the MAC address 511 of the corresponding transmitting wireless communications device, the wireless communications device may obtain the BSSID of the transmitting device, and thereby, determines whether the second frame is an intra-BSS frame or an inter-BSS frame. In another embodiment, a unique ID is decoded from the frame header. In one embodiment, the frame header is the BSS color in the SIG-A field in PHY 522. In one embodiment, globally reserved bits 523 in SIG-A field are used to indicate whether the second frame is an intra-BSS frame or an inter-BSS frame. In another embodiment, one or more bits 524 in SIG-A field are overloaded. In this embodiment, a reserved bit in the SIG-A field is used to indicate whether the one or more SIG-A bits are overloaded. If the reserved is set, the one or more bits SIG-A bits are overloaded to indicate whether the second frame is an intra-BSS frame or an inter-BSS frame.

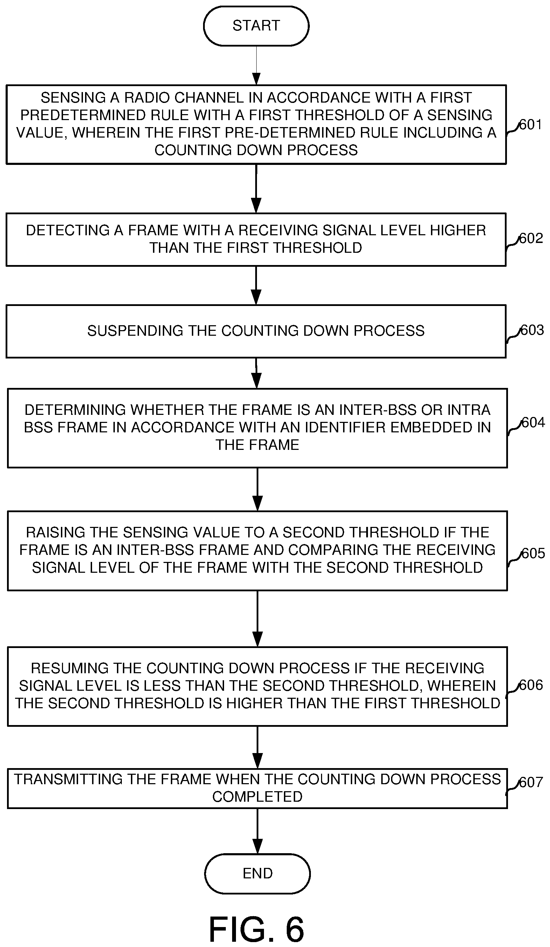

Figure 6 illustrates an exemplary flow chart for a wireless communications device to set different CCA threshold value based on the type of detected frames for the counting down procedure in accordance with embodiments of the current invention. At step 601, the wireless communications device senses a radio channel in accordance with a first predetermined rule with a first threshold of a sensing value, wherein the first pre-determined rule including a counting down process. At step 602, the wireless communications device detects a frame with a receiving signal level higher than the first threshold. At step 603, the wireless communications device suspends the counting down process. At step 604, the wireless communications device determines whether the frame is an inter-BSS or intra BSS frame in accordance with an identifier embedded in the frames. At step 605, the wireless communications device raises the sensing value to a second threshold if the frame is an inter-BSS frame and comparing the receiving signal level of the frame with the second threshold. At step 606, the wireless communications device resumes the counting down process if the receiving signal level is less than the second threshold, wherein the second threshold is higher than the first threshold. At step 607, the wireless communications device transmits the frame when the counting down process completed.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method to increase transmission opportunities when the coverage area of one or more basic service sets, BSSs, overlapping with each other, comprising:
sensing (601) a radio channel in accordance with a first predetermined rule with a first threshold of a sensing value before transmitting a first frame,
**characterized in that** the first pre-determined rule including a counting down process, and
the method further comprises:
detecting (602) a second frame with a receiving signal level higher than the first threshold;
suspending (603) the counting down process before
determining (604) whether the second frame is an inter-BSS or intra BSS frame in accordance with an identifier embedded in the frame;
raising (605)the sensing value to a second threshold if the frame is an inter-BSS frame and comparing the receiving signal level of the second frame with the second threshold;
resuming (605) the counting down process in accordance with a second predetermined rule if the receiving signal level is less than the second threshold; and
transmitting (606) the first frame when the counting down process completed.

2. The method of claim 1, wherein the determination of whether a second frame is an inter-BSS or intra-BSS frame is based on a unique ID carried in a frame header of the second frame.

3. The method of claim 2, the frame header is a MAC header or a PHY header.

4. The method of claim 2 wherein the identifier is set in signaling field of the second frame to indicate whether the second frame is an inter-BSS frame or an intra-BSS frame.

5. The method of claim 4, wherein one or more globally reserved BSS color bits in SIG-A field are set to indicate whether the second frame is an inter-BSS frame or an intra-BSS frame.

6. The method of claim 4, wherein a reserved bit in SIG-A field is set to indicate whether one or more bits are overloaded in the SIG-A field for inter-BSS indication, and if the reserved bit is set, one or more bits in SIG-A field are overloaded to indicate whether the second frame is an inter-BSS frame or an intra-BSS frame.

7. The method of claim 1, wherein the identifier embedded in the second frame is a MAC address of a corresponding transmitting wireless communications device of the second frame.

8. The method of claim 1, wherein the second threshold is preconfigured or is adjusted dynamically based on network conditions.

9. The method of claim 8, wherein the network conditions comprising the transmitting power of a communications device, and the distance between transmitting and receiving communications device.

10. An apparatus, comprising:
a transceiver adapted to transmit and to receive radio signals via a radio access link;
a radio channel sense module (191) adapted to sense a radio channel in accordance with a first predetermined rule with a first threshold of a sensing value before transmitting a first frame,
**characterized in that** the first pre-determined rule includs a counting down process, and
the apparatus further comprises: a detected frame handler (192) adapted to detect a second frame with a receiving signal level higher than the first threshold and to determine whether the second frame is an inter basic service set, BSS, or intra BSS frame in accordance with an identifier embedded in the frame;
a threshold handler (193) adapted to raise the sensing value to a second threshold if the frame is an inter-BSS frame and to compare the receiving signal level of the frame with the second threshold; and
a counting down handler (194) adapted to suspend the counting down process before it is determined whether the second frame is an inter-BSS or intra BSS frame in accordance with an identifier embedded in the frame and to resume the counting down process in accordance with a second predetermined rule if the receiving signal level is less than the second threshold, wherein the second threshold is higher than the first threshold; and
wherein the transceiver is adapted to transmit the first frame when the counting down process completed.

## Patentansprüche

1. Verfahren, um Übertragungsmöglichkeiten zu erhöhen, wenn die Abdeckungsbereiche eines oder mehrerer Basisdienstsätze, BSSs, einander überlagern, aufweisend:
Messen (601) eines Funkkanals gemäß einer ersten vorbestimmten Regel mit einem ersten Schwellenwert eines Messwerts vor einem Übertragen eines ersten Rahmens,
**dadurch gekennzeichnet, dass** die erste vorbestimmte Regel einen Herunterzählvorgang einschließt, und
das Verfahren weiter aufweist:
Erfassen (602) eines zweiten Rahmens mit einem Empfangssignalpegel höher als der erste Schwellenwert;
Aussetzen (603) des Herunterzählvorgangs vor einem
Bestimmen (604), ob der zweite Rahmen ein Inter-BSS- oder Intra-BSS-Rahmen ist, gemäß einem Identifikator, der in dem Rahmen enthalten ist;
Anheben (605) des Messwerts auf einen zweiten Schwellenwert, wenn der Rahmen ein Inter-BSS-Rahmen ist, und Vergleichen des Empfangssignalpegels des zweiten Rahmens mit dem zweiten Schwellenwert;
Wiederaufnehmen (605) des Herunterzählvorgangs gemäß einer zweiten vorbestimmten Regel, wenn der Empfangssignalpegel geringer ist als der zweite Schwellenwert; und
Übertragen (606) des ersten Rahmens, wenn der Herunterzählvorgang abgeschlossen ist.

2. Verfahren gemäß Anspruch 1, wobei die Bestimmung, ob ein zweiter Rahmen ein Inter-BSS- oder ein Intra-BSS-Rahmen ist, auf einer eindeutigen ID basiert, die in einem Rahmenkopf des zweiten Rahmens übertragen wird.

3. Verfahren gemäß Anspruch 2, wobei der Rahmenkopf ein MAC-Kopf oder ein PHY-Kopf ist.

4. Verfahren gemäß Anspruch 2, wobei der Identifikator in einem Signalisierungsfeld des zweiten Rahmens gesetzt ist, um anzuzeigen, ob der zweite Rahmen ein Inter-BSS-Rahmen oder ein Intra-BSS-Rahmen ist.

5. Verfahren gemäß Anspruch 4, wobei ein oder mehrere global reservierte BSS-Farb-Bits in einem SIG-A-Feld gesetzt sind, um anzuzeigen, ob der zweite Rahmen ein Inter-BSS-Rahmen oder ein Intra-BSS-Rahmen ist.

6. Verfahren gemäß Anspruch 4, wobei ein reserviertes Bit in einem SIG-A-Feld gesetzt ist, um anzuzeigen, ob ein oder mehrere Bits in dem SIG-A-Feld für eine Inter-BSS-Indikation überladen sind, und wenn das reservierte Bit gesetzt ist, ein oder mehrere Bits in dem SIG-A-Feld überladen sind, um anzuzeigen, ob der zweite Rahmen ein Inter-BSS-Rahmen oder ein Intra-BSS-Rahmen ist.

7. Verfahren gemäß Anspruch 1, wobei der Identifikator, der in dem zweiten Rahmen enthalten ist, eine MAC-Adresse einer korrespondierenden übertragenden Funkkommunikationsvorrichtung des zweiten Rahmens ist.

8. Verfahren gemäß Anspruch 1, wobei der zweite Schwellenwert vorkonfiguriert ist oder basierend auf Netzwerkkonditionen dynamisch angepasst wird.

9. Verfahren gemäß Anspruch 8, wobei die Netzwerkkonditionen die Übertragungsleistung einer Kommunikationsvorrichtung und den Abstand zwischen sendender und empfangender Kommunikationsvorrichtung umfassen.

10. Vorrichtung, aufweisend:
einen Sende-Empfänger, der eingerichtet ist, Funksignale über eine Funkzugangsverbindung zu senden und zu empfangen;
ein Funkkanalmessmodul (191), das eingerichtet ist, einen Funkkanal gemäß einer ersten vorbestimmten Regel mit einem ersten Schwellenwert eines Messwerts vor einem Übertragen eines ersten Rahmens zu messen,
**dadurch gekennzeichnet, dass** die erste vorbestimmte Regel einen Herunterzählvorgang einschließt, und
die Vorrichtung weiter aufweist: einen Behandler (192) für erfasste Rahmen, der eingerichtet ist, einen zweiten Rahmen mit einem Empfangssignalpegel höher als der erste Schwellenwert zu erfassen, und zu bestimmen, ob der zweite Rahmen ein Inter-Basisdienstsatz, -BSS-, oder ein Intra-BSS-Rahmen ist, gemäß einem Identifikator, der in dem Rahmen enthalten ist;
einen Schwellenwert-Behandler (193), der eingerichtet ist, den Messwert auf einen zweiten Schwellenwert anzuheben, wenn der Rahmen ein Inter-BSS-Rahmen ist, und den Empfangssignalpegel des Rahmens mit dem zweiten Schwellenwert zu vergleichen; und
einen Herunterzähl-Behandler (194), der eingerichtet ist, den Herunterzählvorgang auszusetzen, bevor gemäß einem Identifikator, der in dem Rahmen enthalten ist, bestimmt wird, ob der zweite Rahmen ein Inter-BSS- oder ein Intra-BSS-Rahmen ist, und den Herunterzählvorgang wieder aufzunehmen gemäß einer zweiten vorbestimmten Regel, wenn der Empfangssignalpegel geringer ist als der zweite Schwellenwert, wobei der zweite Schwellenwert höher ist als der erste Schwellenwert; und
wobei der Sende-Empfänger eingerichtet ist, den ersten Rahmen zu übertragen, wenn der Herunterzählvorgang abgeschlossen ist.

## Revendications

1. Procédé pour augmenter les possibilités d'émission lorsque les zones de couverture d'un ou de plusieurs ensemble(s) de services de base, BSS, se chevauchent, comprenant le fait :
de détecter (601) un canal radio selon une première règle prédéterminée avec un premier seuil d'une valeur de détection avant d'émettre une première trame,
**caractérisé en ce que** la première règle prédéterminée comporte un processus de compte à rebours, et
le procédé comprend en outre le fait :
de détecter (602) une deuxième trame avec un niveau de signal de réception supérieur au premier seuil ;
de suspendre (603) le processus de compte à rebours avant de déterminer (604) si la deuxième trame est une trame inter-BSS ou intra-BSS selon un identifiant intégré dans la trame ;
d'élever (605) la valeur de détection jusqu'à un deuxième seuil si la trame est une trame inter-BSS et de comparer le niveau de signal de réception de la deuxième trame au deuxième seuil ;
de reprendre (605) le processus de compte à rebours selon une deuxième règle prédéterminée si le niveau de signal de réception est inférieur au deuxième seuil ; et
d'émettre (606) la première trame lorsque le processus de compte à rebours est terminé.

2. Procédé de la revendication 1, dans lequel le fait de déterminer si une deuxième trame est une trame inter-BSS ou intra-BSS est basé sur un ID unique porté dans un en-tête de trame de la deuxième trame.

3. Procédé de la revendication 2, l'en-tête de trame est un en-tête MAC ou un en-tête PHY.

4. Procédé de la revendication 2, dans lequel l'identifiant est défini dans un champ de signalisation de la deuxième trame pour indiquer si la deuxième trame est une trame inter-BSS ou une trame intra-BSS.

5. Procédé de la revendication 4, dans lequel un ou plusieurs bit(s) de couleur BSS globalement réservé(s) dans le champ SIG-A est/sont défini(s) pour indiquer si la deuxième trame est une trame inter-BSS ou une trame intra-BSS.

6. Procédé de la revendication 4, dans lequel un bit réservé dans le champ SIG-A est défini pour indiquer si un ou plusieurs bit(s) est/sont surchargé(s) dans le champ SIG-A pour une indication inter-BSS et, si le bit réservé est défini, un ou plusieurs bit(s) dans le champ SIG-A est/sont surchargé(s) pour indiquer si la deuxième trame est une trame inter-BSS ou une trame intra-BSS.

7. Procédé de la revendication 1, dans lequel l'identifiant intégré dans la deuxième trame est une adresse MAC d'un dispositif de communication sans fil de transmission correspondant de la deuxième trame.

8. Procédé de la revendication 1, dans lequel le deuxième seuil est préconfiguré ou est ajusté dynamiquement en fonction des conditions du réseau.

9. Procédé de la revendication 8, dans lequel les conditions du réseau comprennent la puissance d'émission d'un dispositif de communication et la distance entre les dispositifs de communication d'émission et de réception.

10. Appareil, comprenant :
un émetteur-récepteur adapté pour émettre et recevoir des signaux radio via une liaison d'accès radio ;
un module de détection de canal radio (191) adapté pour détecter un canal radio selon une première règle prédéterminée avec un premier seuil d'une valeur de détection avant d'émettre une première trame,
**caractérisé en ce que** la première règle prédéterminée comporte un processus de compte à rebours, et
l'appareil comprend en outre : un gestionnaire de trame détectée (192) adapté pour détecter une deuxième trame avec un niveau de signal de réception supérieur au premier seuil et pour déterminer si la deuxième trame est une trame inter-ensemble de services de base, BSS, ou une trame intra-BSS selon un identifiant intégré dans la trame ;
un gestionnaire de seuil (193) adapté pour élever la valeur de détection jusqu'à un deuxième seuil si la trame est une trame inter-BSS et pour comparer le niveau de signal de réception de la trame au deuxième seuil ; et
un gestionnaire de compte à rebours (194) adapté pour suspendre le processus de compte à rebours avant qu'il ne soit déterminé si la deuxième trame est une trame inter-BSS ou intra-BSS selon un identifiant intégré dans la trame et pour reprendre le processus de compte à rebours selon une deuxième règle prédéterminée si le niveau du signal de réception est inférieur au deuxième seuil, où le deuxième seuil est supérieur au premier seuil ; et
dans lequel l'émetteur-récepteur est adapté pour émettre la première trame lorsque le processus de compte à rebours est terminé.
